# EUROPEAN PATENT SPECIFICATION

(11) **EP 3 383 582 B1**
(45) Date of publication and mention of the grant of the patent: **21.02.2024**
(21) Application number: 16815653.7
(22) Date of filing: 28.11.2016
(51) Int. Cl.: B23Q 11/00, G01S 15/04, F16P 3/14, G01N 29/04, G01N 29/44

(54) **OPERATING MACHINE WITH A SYSTEM OF DETECTION AND ANALYSIS OF BODIES SITUATED IN THE WORKING SPACE OF THE MACHINE**
ARBEITSMASCHINE MIT EINEM SYSTEM ZUR DETEKTION UND ANALYSE VON KÖRPERN IM ARBEITSRAUM DER MASCHINE
MACHINE OPÉRATIONNELLE AVEC UN SYSTÈME DE DÉTECTION ET D'ANALYSE DE CORPS SITUÉS DANS L'ESPACE DE TRAVAIL DE LA MACHINE

(30) Priority: 30.11.2015 IT UB20156037
(43) Date of publication of application: 10.10.2018
(73) Proprietor: Servizi Impresa S.r.l., 25020 Capriano del Colle (BS) (IT)
(72) Inventor: CORRADO, Livio, 25020 Capriano del Colle (BS) (IT)
(74) Representative: Chimini, Francesco
(86) International application number: PCT/IB2016/057155
(87) International publication number: WO 2017/093877

(56) References cited:
- EP-A2- 1 432 553
- EP-B1- 1 432 553

## Description

### Field of the Invention

The present invention refers to an operating machine with a system able to detect the presence of a body located in the working space of an operating machine, to classify it on the basis of parameters set beforehand and to provide resulting commands to the operating machine.

The present invention also relates to a method of controlling an operating machine.

### State of the Art

As it is known the operating machines, such as machine tools, agricultural machinery and building machines are amongst the major causes of incidents at work. In fact, despite the stringent safety requirements linked to production and the use of these machines and despite a number of regulations in force in the field of safety at workplaces, incidents caused by these machines to humans each year are numerous.

For an operator, the main risks related to the use of the operating machines are: fall, mostly if inside the working space of the machine; accidental insertion in the machine of part of the body or garment that could drag the body; impacts, compressions and strokes to parts of the body; contact with power or electrical distribution wires; contact with high temperature members; exposure to radiation; contact with powders, gasses, process waste, or other chemical or biological agents harmful to humans.

Signs, barriers and stopping devices of the operating machines, provided by accident prevention regulations, have only marginally reduced incidents at work. The signs, for example, often are not seen or else can be deliberately ignored by the operator on duty, as well as the barriers can be circumvented and thus their use could be thwarted. For what relates to the stopping devices of the operating machines, it must be added that often their effectiveness is even thwarted by voluntary tampering carried out by the operators themselves, in particular to avoid interruptions in the productivity due to false alarm. These interruptions, in fact, cause serious economic losses.

Currently, some operating machines are provided with optical sensors, such as for example photocells, able to detect the presence of a body in the working space of a machine and to emit a warning signal or else control the stopping of the machine. However, this solution is applicable only in limited cases, such as for example in case of handling machine thereby avoiding any type of contact with the detected body, whether it is a real or imaginary obstacle. Therefore, it doesn't solve the above mentioned problems, as it is not applicable to all of the remaining cases. In fact, if it is applied for example to a machine tool, the presence of a product under manufacturing in the working space of the machine tool (adapted to process the manufactures themselves), absurdly would stop the production process, or else it would continuously activate the warning signal. If it is applied in proximity of the working space, in order not to intercept the manufactured product but only what is getting close to it, it could stop the machine, or activate the warning signal, in the presence of chips or other processing waste and this is unacceptable.

EP 1 432 553 B1 discloses a sensing mechanism having an ultrasound sensor panel, that senses if a human extremity is in close proximity to a rotating saw blade of a woodworking power tool.

Basically, currently effective solutions able to avoid incidents and, at the same time, unnecessary suspensions of the production process or the work in progress don't exist. Furthermore, as things stand now, safety systems applicable to any type of operating machine don't exist.

### Summary of the invention

Therefore, it is an object of the present invention to provide a safety system for operating machines which is free of the above mentioned drawbacks.

In particular, an object of the present invention is to provide a system of detection and analysis of bodies situated in the working space of an operating machine, which is effective from the safety point of view, which doesn't unnecessarily compromise the productivity of the machine itself and possibly of the plant wherein it is inserted, and which is applicable to any type of operating machine.

The present invention provides an operating machine that is safe without compromising its productivity.

A further object of the present invention is to provide a method of controlling an operating machine which allows the machine working effectively and, at the same time, avoiding incidents.

These and further objects are achieved by a system of detection and analysis of bodies situated in the working space of an operating machine, an operating machine provided with this system and a method of controlling an operating machine which provide not only for the interception of bodies present in the working space of an operating machine but also an analysis of these bodies, adapted to determine an action or non-action on the machine itself.

More precisely the invention, in accordance with a first aspect thereof, relates to an operating machine provided with a system as defined in claim 1.

Such a system allows not only intercepting the presence of a body in the working space of an operating machine, but also determining if its presence is acceptable or not in this space and accordingly controlling the operating machine. In other words, it is possible to set beforehand which bodies can be admitted in the working space and which not and, accordingly, arrange the system.

With such a system, it is possible to avoid incidents on humans and machines, avoiding at the same time that the machine is stopped due to false alarm. In particular, the presence of an analyzer of reflected sound waves allows determining predetermined features of the body present in the working space and comparing them with preset parameters, whereas the presence of an interface device allows providing a command to the operating machine.

Thereby it is possible, for example, stopping the operating machine when part of the body of an operator or garment thereof are in the working space and thus avoiding incidents involving humans. Furthermore, it is possible to set the stopping or slowing down of the machine when there are bodies in its working space that could compromise the functionality of the machine itself or create dangerous situations. On the contrary, in all of the desired cases, no command is provided to the machine.

Therefore, such a system allows the operator positioning himself in the proximity of the working space, for example for supporting a workpiece, thus guaranteeing his safety.

A further advantage of such a system is its easy applicability to any already existing operating machine, independently of the type of machine and the type of danger (mechanical, chemical or physical).

Another advantage of the system, as described and claimed herein, consists in its applicability also to uses different than those linked to safety. In fact, such a system could be used, for example, to identify and sort bodies needing working and/or treatments different from one another so that each body is directed towards its destination.

Preferably, the emitter of sound waves is an ultrasonic generator and the receiver of reflected sound waves is an ultrasonic receiver. These waves, in fact, are not audible to the human ear; therefore, they do not disturb workplaces and, mostly, allows getting a number of information on the intercepted bodies. Furthermore, a system of this type with ultrasound sensors, allows getting information also on bodies located at great distances, with extreme precision also in critical conditions, for example in powdery, dirty or foggy environments. Furthermore, it is able to accurately detect all types of known materials. Finally, the sound waves of ultrasonic type are immune to electromagnetic fields and are considered harmless to humans.

According to the invention, the analyzer of reflected sound waves is adapted to examine the reflected sound waves so that information about at least the density and preferably about shape and/or size and/or nature of the body situated in the working space of the operating machine, are obtained.

According to the invention, the analyzer of reflected sound waves is adapted to compare the obtained information with preset parameters.

Thereby it is possible to preset one or more parameters, based on specific requirements. If for example it's only necessary to intercept the presence of humans, it will be sufficient to determine only one feature, for example the density of the intercepted bodies, and compare it with a suitable parameter or range of preset parameters.

The claimed operating machine is able to avoid incidents to humans and to the machine itself, without reducing its productivity.

The present invention, in accordance with a second aspect thereof, relates to a method of controlling an operating machine as set out in claim 3.

Such a method allows the operator working in safe conditions and, at the same time, not renouncing to the productivity of the machine, as it would undergo stops or slowdowns only in cases of real risks.

The analyzing step comprises the determination of at least the density of said body and preferably its shape and/or its size and/or its nature, depending on the specific requirements. Thereby the method can be tailored, based on the real needs of the user.

According to the invention, the command provided to the operating machine can be: reducing the moving speed of the machine itself or its working speed; stopping the machine; isolating the active member of the machine; warning of danger; not applying any action. Such a choice depends on the type of machine to which the method is applied and on the specific production/processing requirements.

In accordance with preferred embodiments of the method according to the present invention, the intercepting step is carried out by ultrasound sensors.

In fact, these sensors are noiseless and allow analyses of various types on the intercepted body, also at great distances and in critical conditions.

For the purposes of the present invention, the term "operating machine" is used to identify a device or apparatus able to carry out, automatically or else with the intervention of a human being, mechanical and nonmechanical operations.

Herein, when speaking about "nature of the body" is made reference to the chemical/physical features of the body.

### Brief List of the Figures

Further characteristics and advantages of the present invention will be more evident from the review of the following description of some preferred, but not exclusive, embodiments shown for illustration purposes only and without limitation, with the aid of the attached drawings, in which:
- figure 1 shows a schematic view of a first embodiment of the system of detection and analysis of bodies situated in the working space of an operating machine according to the present invention; and
- figure 2 shows a schematic view of a second embodiment of the system of detection and analysis of bodies situated in the working space of an operating machine according to the present invention.

### Detailed description of the invention

The following detailed description refers to a system of detection and analysis of bodies situated in the working space of an operating machine, an operating machine provided with this system and a method of controlling an operating machine.

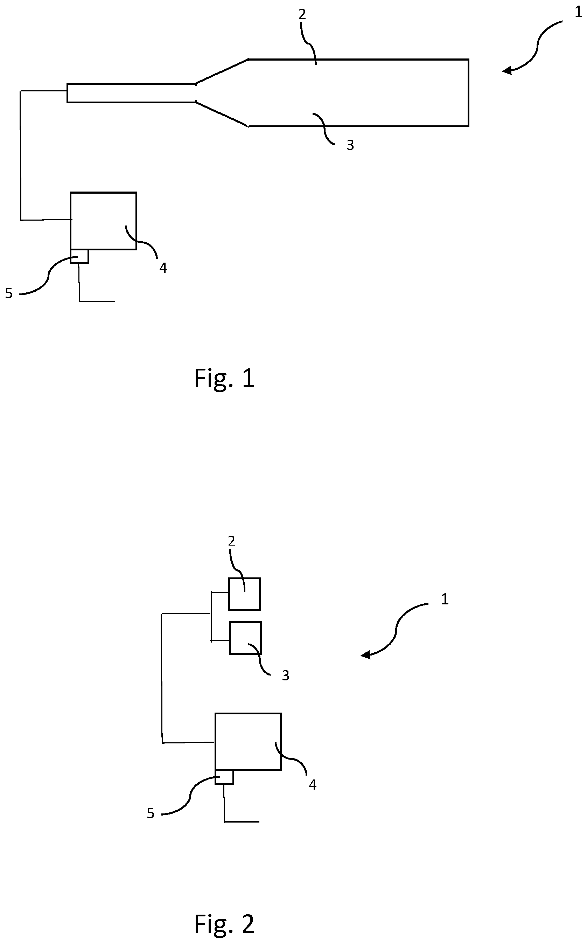

With reference to figures 1 and 2, a system of detection and analysis of bodies situated in the working space of an operating machine, is overall denoted with the reference number 1.

The system **1** comprises an emitter **2** of sound waves, and a receiver **3** of reflected sound waves. Emitter **2** and receiver **3** can be integrated in one unique body, usually named probe, as in the embodiment showed in figure 1, or else can be two distinct bodies, as in the embodiment showed in figure 2.

In accordance with these embodiments of the invention, the emitter **2** of sound waves is an ultrasonic generator and the receiver **3** of reflected sound waves is an ultrasonic receiver. Ultrasonic generator and receiver are transducers of known type.

Ultrasounds are mechanical sound waves having frequencies higher than 20 KHz, as widely known.

The ultrasonic generator exploits the piezoelectric or magnetostrictive properties of some crystals, i.e. their ability to contract and expand under the action of an alternating electric or magnetic field. For suitable frequencies of this electric or magnetic field, the vibrations of the crystal produce elastic waves of ultrasonic frequency. The so-generated ultrasounds are transferred in the interested area, in this case in the working space of an operating machine. When the beam of ultrasonic waves encounters an obstacle, it will be reflected, absorbed, deflected or diffracted according to laws regulating the phenomena of wave propagation. The signal returning to the receiver 3 will be a complex signal as it is the result of the summation of many waves, some with equal intensity and other with intensity different from the incident waves, but however all out of phase. This signal contains a lot of information on the obstacle encountered by the beam of incident ultrasounds, i.e. on a possible body present in the working space of an operating machine. In view of its complexity, this signal must be amplified, filtered and analyzed in order to obtain information.

The same crystal able to emit ultrasounds can generate an electrical or magnetic signal, when invested by a beam of elastic waves, therefore when the wave reflected or emitted by the obstacle comes back to the receiver 3, it produces an electrical signal that, suitably analyzed, provides information on the body present in the working space of the machine.

The system 1 according to the present invention comprises an analyzer 4 of reflected sound waves. This analyzer is able to analyze the reflected sound waves, i.e. the above mentioned electrical signal, so that information about at least the density and preferably the shape and/or the size and/or the nature of the body situated in the working space of the operating machine, is obtained. The analyzer **4** is further adapted to compare this information with corresponding preset parameters.

Said analyzer **4** can comprise an oscilloscope and/or a conveniently programmed computer.

The analyzer **4** can be integrated into the probe or else into the receiver **3,** or else can be separated from them, as in the two embodiments showed in figures 1 and 2.

Furthermore, the system **1** comprises an interface device **5** interfacing the analyzer **4** with a control member of the operating machine. This interface device **5** is adapted to act on the control member of the operating machine, depending on the response of the analyzer **4.**

In other words, if from the analysis carried out by the analyzer **4** there is the presence of a body previously classified as unacceptable in the working space of the operating machine, the interface device **5** provides a command to the operating machine.

It is possible to program the analyzer **4** depending on requirements and type of the operating machine, for example it could cause the interface **5** to command the slowdown of the operating machine, when non-human bodies or however non-alive bodies that are not compromising the operation of the machine itself are detected, or else when the detected body is a human or a garment thereof or a body that however could compromise the operation of the machine, it can cause the interface **5** to command the stop of the machine or the isolation of the active part constituting the danger or that could be compromised. On the contrary, when the detected body is classified as non-dangerous by the analyzer **4,** no command is provided to the operating machine by the interface **5.**

If it is only necessary to intercept the presence of humans, the analyzer **4** will be programmed so that to determine only one feature, for example the density of the intercepted bodies, and to compare it with a suitable parameter or range of preset parameters. If the density determined by the analysis is not conforming to parameters set beforehand, i.e. is corresponding to a value or within a range of values set in the analyzer **4,** the interface **5** will command the stop of the machine.

By stop of the machine is meant the securing of the operator that can comprise the zeroing of the moving speed of the machine, if it is a mobile machine, or of its working speed if it is a machine tool, or else of its dispensing speed if the danger is of chemical/physical type.

The interface device **5** can comprise an electric or pneumatic circuit and is adapted to act on electric circuits of any type.

It is possible to provide an emergency device that, in case of failure of the interface device **5** or the control member, imposes the stopping of power supply to the operating machine, once an unwanted body is detected.

The present invention relates to an operating machine provided with a control member and a system **1** as previously described.

The control member can be a simple on/off switch or a more complex device, it can comprise a mechanical member directly intervening on motion transmission members, or else acting on the electric, electronic, pneumatic or hydraulic circuitry.

The operating machine can be a machine tool, a handling machine (materials, goods or manufactured articles) to be used in a warehouse, heavy equipment (such as for example excavators, bulldozers, scrapers), an aerial device (such as for example a lifting platform or crane), an agricultural machine or a building machine. It can be a mobile or else stationary machine.

The system **1** must be suitably dimensioned and installed onto an operating machine. In fact, as it is known, ultrasound sensors have a blind area at a sensitive surface that usually is perpendicular to the direction of wave transmission. Therefore, it is necessary to suitably orient the emitter **1,** or the probe, or else to place suitable wave deflectors.

Finally, the present invention relates to a method of controlling an operating machine comprising the following steps of:
a. intercepting the presence of a body inside the working space of the operating machine;
b. analyzing at least one feature of such a body;
c. comparing such a feature with preset parameters;
d. providing a command to the operating machine, based on the comparison result from step c.

The analyzing step comprises the determination of at least the density of said body and preferably its shape and/or its size and/or its nature, depending on the specific requirements. In other words, the method can be customized, based on the actual needs of the user.

Once analyzed the body, based on the features set beforehand, and the results of the analysis having been compared with preset parameters, the method provides for a command to the operating machine. In other words, the comparing step establishes whether the intercepted and analyzed body is acceptable in the working space of the operating machine or not and provides a resulting command to the operating machine. This command can comprise: reducing the moving speed of the machine or its working speed; stopping the machine; isolating the active member of the machine; warning (optically and/or acoustically and/or mechanically) of danger; not applying any action. Such a choice depends on the type of machine to which the method is applied and on the specific production/processing requirements.

In accordance with the method according to the present invention, the intercepting step is carried out by an emitter **2** of sound waves and a receiver **3** of reflected sound waves. These emitter **2** and receiver **3** of sound waves are preferably ultrasound sensors.

In such a case, the step of analyzing the body provides the amplification, filtration and analysis of the reflected waves.

Furthermore, , the analyzing step and the comparing step are carried out by an analyzer **4.**

In accordance with alternative embodiments, the intercepting step and the analyzing step are carried out by ultrasound sensors in combination with an analyzer **4,** to which also the task of carrying out the comparing step can be entrusted.

The step of controlling the operating machine is entrusted to an interface device **5** instead.

The emitter **2** of sound waves, the receiver **3** of reflected sound waves, the analyzer **4,** the interface device **5** and the operating machine have already been previously described and therefore will not further described herein below.

With the object of satisfying contingent and specific requirements, the field technician could make further modifications and variants to the operating machine and the method according to the present invention, all of which, however, contained in the scope of protection of the present invention, which is defined solely by the appended claims.

## Claims

1. Operating machine selected from: machine tool, handling machine, lifting machine, agricultural machine, building machine, said operating machine being provided with a control member, comprising a system (1) of detection and analysis of bodies situated in the working space of the operating machine, the system comprising: an emitter (2) of sound waves, a receiver (3) of reflected sound waves, an analyzer (4) of these reflected sound waves and an interface device (5) between said analyzer (4) and said control member of the operating machine, said interface device (5) being adapted to act on the control member of the operating machine, depending on the response of the analyzer (4),
**characterized in that**
the analyzer (4) of reflected sound waves is adapted to examine the reflected sound waves so that information about at least the density of the body situated in the working space of the operating machine is obtained, and wherein the analyzer (4) of reflected sound waves is adapted to compare the obtained information with preset parameters, so that the body situated in the working space is classified as:
- a non-alive body not compromising the operation of the operating machine, or
- a body compromising the operation of the operating machine, for example a human body or a garment, or
- a non-dangerous body,
wherein the operating machine is configured to be commanded by means of the interface device (5) to slowdown when the body situated in the working space is classified as the non-alive body not compromising the operation of the operating machine,
wherein the operating machine is configured to be commanded by means of the interface device (5) to stop when the body situated in the working space is classified as the body compromising the operation of the operating machine,
wherein the operating machine is configured to be not commanded by means of the interface device (5) when the body situated in the working space is classified as non-dangerous body.

2. Operating machine according to claim 1, wherein the emitter (2) of sound waves is an ultrasonic generator and the receiver (3) of reflected sound waves is an ultrasonic receiver.

3. Method of controlling an operating machine according to any one of the preceding claims, comprising the following steps of:
a. intercepting the presence of a body inside the working space of the operating machine;
b. analyzing at least one feature of such a body;
c. comparing such a feature with preset parameters, so that the body situated in the working space is classified as a non-alive body not compromising the operation of the operating machine, a body compromising the operation of the operating machine, or a non-dangerous body;
d. providing a command to the operating machine, based on the comparison result from step c;
wherein the step b of analyzing comprises the step of determining at least the density of said body;
wherein the step a of intercepting is carried out by an emitter (2) of sound waves and a receiver (3) of reflected sound waves;
wherein the step b of analyzing and the step c of comparing are carried out by an analyzer (4),
wherein the step d of providing a command to the operating machine comprises:
- commanding the operating machine to slowdown when the body situated in the working space is classified as the non-alive body not compromising the operation of the operating machine, or
- commanding the operating machine to stop when the body situated in the working space is classified as the body compromising the operation of the operating machine, or
- not commanding the operating machine when the body situated in the working space is classified as non-dangerous body.

4. Method according to claim 3, wherein the step d of providing a command to the operating machine comprises at least one of the following commands: reducing the moving or working speed of the machine; stopping the machine; isolating the active member of the machine; warning of danger; not applying any action.

5. Method according to claim 3, wherein said emitter (2) and said receiver (3) of sound waves are ultrasound sensors.

6. Method according to claim 3, wherein the step d of providing a command to the operating machine is carried out by an interface device (5).

## Patentansprüche

1. Arbeitsmaschine, die ausgewählt ist aus: Werkzeugmaschine, Handhabungsmaschine, Hebemaschine, landwirtschaftliche Maschine, Baumaschine, wobei die Arbeitsmaschine mit einem Steuer- bzw. Regelglied versehen ist, umfassend ein System (1) zur Detektion und Analyse von Körpern im Arbeitsraum der Arbeitsmaschine, wobei das System umfasst: einen Sender (2) von Schallwellen, einen Empfänger (3) von reflektierten Schallwellen, einen Analysator (4) dieser reflektierten Schallwellen und eine Schnittstellenvorrichtung (5) zwischen dem Analysator (4) und dem Steuer- bzw. Regelglied der Arbeitsmaschine, wobei die Schnittstellenvorrichtung (5) angepasst ist, auf das Steuer- bzw. Regelglied der Arbeitsmaschine in Abhängigkeit von der Reaktion des Analysators (4) zu wirken,
**dadurch gekennzeichnet, dass**
der Analysator (4) von reflektierten Schallwellen angepasst ist, die reflektierten Schallwellen zu untersuchen, sodass Informationen über zumindest die Dichte des Körpers im Arbeitsraum der Arbeitsmaschine erlangt werden, und wobei der Analysator (4) von reflektierten Schallwellen angepasst ist, die erlangten Informationen mit voreingestellten Parametern zu vergleichen, sodass der Körper im Arbeitsraum klassifiziert wird als:
- ein nichtlebendiger Körper, der den Betrieb der Arbeitsmaschine nicht beeinträchtigt, oder
- ein Körper, der den Betrieb der Arbeitsmaschine beeinträchtigt, zum Beispiel ein menschlicher Körper oder ein Kleidungsstück, oder
- ein ungefährlicher Körper,
wobei die Arbeitsmaschine konfiguriert ist, mittels der Schnittstellenvorrichtung (5) befohlen zu werden, sich zu verlangsamen, wenn der Körper im Arbeitsraum als der nichtlebendige Körper, der den Betrieb der Arbeitsmaschine nicht beeinträchtigt, klassifiziert wird,
wobei die Arbeitsmaschine konfiguriert ist, mittels der Schnittstellenvorrichtung (5) befohlen zu werden, zu stoppen, wenn der Körper im Arbeitsraum als der Körper, der den Betrieb der Arbeitsmaschine beeinträchtigt, klassifiziert wird,
wobei die Arbeitsmaschine konfiguriert ist, nicht mittels der Schnittstellenvorrichtung (5) befohlen zu werden, wenn der Körper im Arbeitsraum als ungefährlicher Körper klassifiziert wird.

2. Arbeitsmaschine nach Anspruch 1, wobei der Sender (2) von Schallwellen ein Ultraschallgenerator ist und der Empfänger (3) von reflektierten Schallwellen ein Ultraschallempfänger ist.

3. Verfahren zur Steuerung bzw. Regelung einer Arbeitsmaschine nach einem der vorhergehenden Ansprüche, umfassend die folgenden Schritte:
a. Erfassen des Vorhandenseins eines Körpers innerhalb des Arbeitsraums der Arbeitsmaschine;
b. Analysieren mindestens eines Merkmals eines solchen Körpers;
c. Vergleichen eines solchen Merkmals mit voreingestellten Parametern, sodass der Körper im Arbeitsraum als ein nichtlebendiger Körper, der den Betrieb der Arbeitsmaschine nicht beeinträchtigt, ein Körper, der den Betrieb der Arbeitsmaschine beeinträchtigt, oder ein ungefährlicher Körper klassifiziert wird;
d. Bereitstellen eines Befehls an die Arbeitsmaschine basierend auf dem Vergleichsergebnis von Schritt c;
wobei der Schritt b des Analysierens den Schritt des Bestimmens zumindest der Dichte des Körpers umfasst;
wobei der Schritt a des Erfassens durch einen Sender (2) von Schallwellen und einen Empfänger (3) von reflektierten Schallwellen erfolgt;
wobei der Schritt b des Analysierens und der Schritt c des Vergleichens durch einen Analysator (4) erfolgen,
wobei der Schritt d des Bereitstellens eines Befehls an die Arbeitsmaschine umfasst:
- Befehlen der Arbeitsmaschine, sich zu verlangsamen, wenn der Körper im Arbeitsraum als der nichtlebendige Körper, der den Betrieb der Arbeitsmaschine nicht beeinträchtigt, klassifiziert wird, oder
- Befehlen der Arbeitsmaschine, zu stoppen, wenn der Körper im Arbeitsraum als der Körper, der den Betrieb der Arbeitsmaschine beeinträchtigt, klassifiziert wird, oder
- Nicht Befehlen der Arbeitsmaschine, wenn der Körper im Arbeitsraum als ungefährlicher Körper klassifiziert wird.

4. Verfahren nach Anspruch 3, wobei der Schritt d des Bereitstellens eines Befehls an die Arbeitsmaschine mindestens einen der folgenden Befehle umfasst: Reduzieren der Bewegungs- oder Arbeitsgeschwindigkeit der Maschine; Stoppen der Maschine; Isolieren des aktiven Glieds der Maschine; Warnen vor Gefahr; Nicht Anwenden irgendeiner Aktion.

5. Verfahren nach Anspruch 3, wobei der Sender (2) und der Empfänger (3) von Schallwellen Ultraschallsensoren sind.

6. Verfahren nach Anspruch 3, wobei der Schritt d des Bereitstellens eines Befehls an die Arbeitsmaschine durch eine Schnittstellenvorrichtung (5) erfolgt.

## Revendications

1. Machine opérationnelle sélectionnée parmi : une machine-outil, une machine de manutention, une machine de levage, une machine agricole, une machine de construction, ladite machine opérationnelle étant dotée d'un élément de commande, comprenant un système (1) de détection et d'analyse de corps situés dans l'espace de travail de la machine opérationnelle, le système comprenant : un émetteur (2) d'ondes sonores, un récepteur (3) d'ondes sonores réfléchies, un analyseur (4) de ces ondes sonores réfléchies et un dispositif d'interface (5) entre ledit analyseur (4) et ledit élément de commande de la machine opérationnelle, ledit dispositif d'interface (5) étant adapté pour agir sur l'élément de commande de la machine opérationnelle, en fonction de la réponse de l'analyseur (4),
**caractérisée en ce que** l'analyseur (4) d'ondes sonores réfléchies est adapté pour examiner les ondes sonores réfléchies de manière que des informations concernant au moins la densité du corps situé dans l'espace de travail de la machine opérationnelle soient obtenues, et dans laquelle l'analyseur (4) d'ondes sonores réfléchies est adapté pour comparer les informations obtenues avec des paramètres prédéfinis, de manière que le corps situé dans l'espace de travail soit classé comme :
- un corps non vivant ne compromettant pas le fonctionnement de la machine opérationnelle, ou
- un corps compromettant le fonctionnement de la machine opérationnelle, par exemple un corps humain ou un vêtement, ou
- un corps non dangereux,
dans laquelle la machine opérationnelle est configurée pour être commandée au moyen du dispositif d'interface (5) pour ralentir quand le corps situé dans l'espace de travail est classé comme le corps non vivant ne compromettant pas le fonctionnement de la machine opérationnelle,
dans laquelle la machine opérationnelle est configurée pour être commandée au moyen du dispositif d'interface (5) pour s'arrêter quand le corps situé dans l'espace de travail est classé comme le corps compromettant le fonctionnement de la machine opérationnelle,
dans laquelle la machine opérationnelle est configurée pour ne pas être commandée au moyen du dispositif d'interface (5) quand le corps situé dans l'espace de travail est classé comme un corps non dangereux.

2. Machine opérationnelle selon la revendication 1, dans laquelle l'émetteur (2) d'ondes sonores est un générateur d'ultrasons et le récepteur (3) d'ondes sonores réfléchies est un récepteur d'ultrasons.

3. Procédé de commande d'une machine opérationnelle selon l'une quelconque des revendications précédentes, comprenant les étapes suivantes :
a. l'interception de la présence d'un corps à l'intérieur de l'espace de travail de la machine opérationnelle ;
b. l'analyse d'au moins une caractéristique d'un tel corps ;
c. la comparaison d'une telle caractéristique avec des paramètres prédéfinis, de manière que le corps situé dans l'espace de travail soit classé comme un corps non vivant ne compromettant pas le fonctionnement de la machine opérationnelle, un corps compromettant le fonctionnement de la machine opérationnelle, ou un corps non dangereux ;
d. la fourniture d'une commande à la machine opérationnelle, sur la base du résultat de comparaison provenant de l'étape c ;
dans lequel l'étape b d'analyse comprend l'étape consistant à déterminer au moins la densité dudit corps ;
dans lequel l'étape a d'interception est réalisée par un émetteur (2) d'ondes sonores et un récepteur (3) d'ondes sonores réfléchies ;
dans lequel l'étape b d'analyse et l'étape c de comparaison sont réalisées par un analyseur (4),
dans lequel l'étape d de fourniture d'une commande à la machine opérationnelle comprend :
- la commande de la machine opérationnelle pour ralentir quand le corps situé dans l'espace de travail est classé comme le corps non vivant ne compromettant pas le fonctionnement de la machine opérationnelle, ou
- la commande de la machine opérationnelle pour s'arrêter quand le corps situé dans l'espace de travail est classé comme le corps compromettant le fonctionnement de la machine opérationnelle, ou
- l'absence de commande de la machine opérationnelle quand le corps situé dans l'espace de travail est classé comme un corps non dangereux.

4. Procédé selon la revendication 3, dans lequel l'étape d de fourniture d'une commande à la machine opérationnelle comprend au moins une des commandes suivantes : la réduction du mouvement ou de la vitesse de travail de la machine ; l'arrêt de la machine ; l'isolation de l'élément actif de la machine ; l'absence d'application de toute action.

5. Procédé selon la revendication 3, dans lequel ledit émetteur (2) et ledit récepteur (3) d'ondes sonores sont des capteurs à ultrasons.

6. Procédé selon la revendication 3, dans lequel l'étape d de fourniture d'une commande à la machine opérationnelle est réalisée par un dispositif d'interface (5).
